# EUROPEAN PATENT SPECIFICATION

(11) **EP 4 490 075 B1**
(45) Date of publication and mention of the grant of the patent: **24.06.2026**
(21) Application number: 23709160.8
(22) Date of filing: 01.03.2023
(51) Int. Cl.: B65G 1/04

(54) **CONTAINER HANDLING VEHICLE**
CONTAINERHANDHABUNGSFAHRZEUG
VÉHICULE DE MANUTENTION DE CONTENEURS

(30) Priority: 08.03.2022 NO 20220290; 08.03.2022 NO 20220291; 07.04.2022 NO 20220422
(43) Date of publication of application: 15.01.2025
(73) Proprietor: AutoStore Technology AS, 5578 Nedre Vats (NO)
(72) Inventor: AUSTRHEIM, Trond, 5590 Etne (NO); FJELDHEIM, Ivar, 5533 HAUGESUND (NO)
(74) Representative: Kilburn & Strode LLP
(86) International application number: PCT/EP2023/055174
(87) International publication number: WO 2023/169900

(56) References cited:
- WO-A1-2019/206440
- WO-A1-2020/193406
- WO-A1-2021/175949
- WO-A1-2021/245162
- CN-A- 111 703 463
- DE-A1- 102019 214 608
- US-A1- 2019 161 273

## Description

### Field of the invention

The present invention relates to a container handling vehicle for moving in two perpendicular directions upon a horizontal grid-based rail system.

### Background and prior art

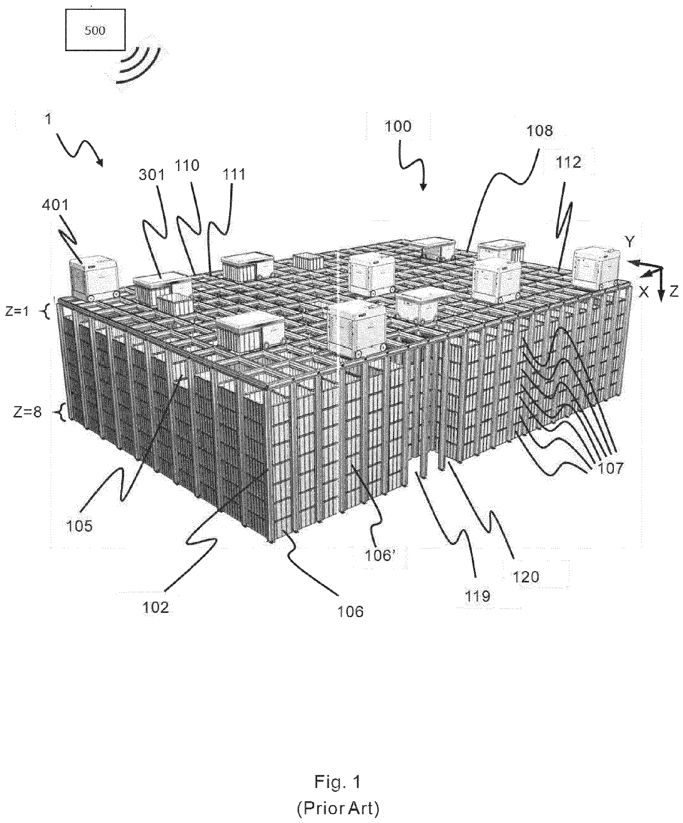

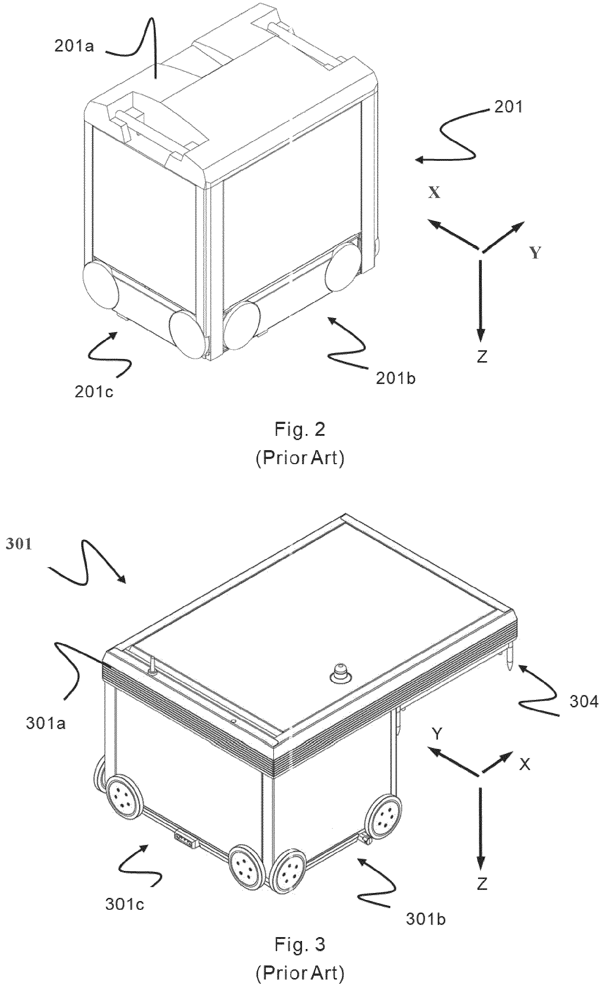

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The upright members 102 may typically be made of metal, e.g. extruded aluminium profiles.

The framework structure 100 of the automated storage and retrieval system 1 comprises a horizontal grid-based rail system 108 (i.e. a rail grid) arranged across the top of framework structure 100. A plurality of container handling vehicles 201,301,401 may be operated on the rail system 108 to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a second direction X across the top of the frame structure 100, and a second set of parallel rails 111 arranged perpendicular to the first set of rails 110 to guide movement of the container handling vehicles 201,301,401 in a first direction Y which is perpendicular to the first direction Y. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal X-Y plane.

The upright members 102 of the framework structure 100 may be used to guide the storage containers during raising of the containers 106 out from and lowering of the containers 106 into the columns 105. The stacks 107 of containers 106 are typically self-supportive.

Each prior art container handling vehicle 201,301,401 comprises a vehicle body 201a,301a,401a and first and second sets of wheels 201b,201c,301b,301c,401b,401c which enable the lateral movement of the container handling vehicles 201,301,401 in the *X* direction and in the *Y* direction. In Figs. 2, 3 and 4 two wheels in each set are fully visible. The first set of wheels 201c,301b,401c is arranged to engage with two adjacent rails of the first set 110 of rails, and the second set of wheels 201b,301c,401c is arranged to engage with two adjacent rails of the second set 111 of rails. At least one of the sets of wheels 201b,301b,201c,301c,401b,401c can be lifted and lowered, so that the first set of wheels 201c,301b,401b and/or the second set of wheels 201b,301c,401c can be engaged or disengaged with their respective set of rails 110, 111.

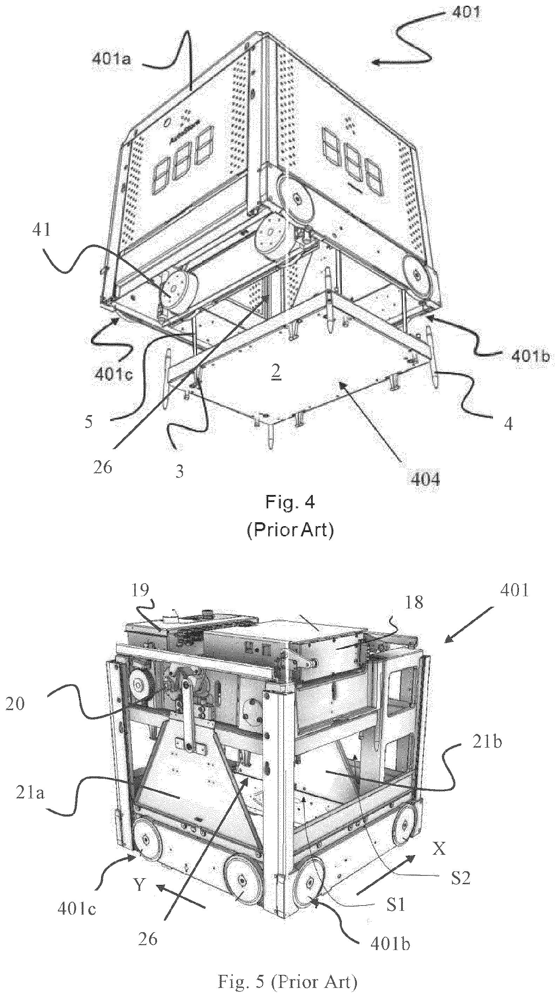

Each prior art container handling vehicle 201,301,401 also comprises a lift device 404, see fig. 4, for vertical transportation of storage containers 106 (i.e. a container lift device), e.g. raising a storage container 106 from, and lowering a storage container 106 into, a storage column 105. The lift device 404 features a lifting frame 2 comprising container connectors 3 and guiding pins 4 adapted to engage a storage container 106. The lifting frame 2 can be lowered from the vehicle 201,301,401 so that the position of the lifting frame 2 with respect to the vehicle 201,301,401 can be adjusted in a third direction Z which is orthogonal the first direction Y and the second direction X. The lifting device of the container handling vehicle 201 is located within the vehicle body 201a in Fig. 2.

To raise or lower the lifting frame 2 (and optionally a connected storage container 106), the lifting frame 2 is suspended from a band drive assembly by lifting bands 5. In the band drive assembly, the lifting bands are commonly spooled on/off at least one rotating lifting shaft or reel arranged in the container handling vehicle. Various designs of band drive assemblies are described in for instance WO 2015/193278 A1, WO 2017/129384 A1 and WO 2019/206438 A1.

Conventionally, and also for the purpose of this application, *Z*=1 identifies the uppermost layer for storing storage containers below the rail system 108, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y=*1*...n* identifies the position of each storage column 105 in the horizontal plane. Consequently, as an example, and using the Cartesian coordinate system *X*, *Y,* Z indicated in Fig. 1, the storage container identified as 106' in Fig. 1 can be said to occupy storage position *X=*17, *Y=*1, *Z*=6. The container handling vehicles 201,301,401 can be said to travel in layer Z=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a as shown in Figs. 2 and 4 and as described in e.g. WO2015/193278A1 and WO2019/206487A1.

Fig. 3 shows an alternative configuration of a container handling vehicle 301 with a cantilever construction. Such a vehicle is described in detail in e.g. NO317366.

The cavity container handling vehicles 201 shown in Fig. 2 may have a footprint that covers an area with dimensions in the X and Y directions which is generally equal to the lateral extent of a storage column 105, e.g. as is described in WO2015/193278A1.

The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, each rail may comprise two parallel tracks, or the rail system may comprise one track rails in one direction and two track rails in the other direction. Each rail may comprise a pair of track members, each track member being provided with a single track, the pair of track members being fastened together to provide a rail in a given direction.

WO2018/146304A1 illustrates a typical configuration of rail system 108 comprising rails and parallel tracks in both *X* and *Y* directions forming a rail grid.

In the framework structure 100, most of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station

The conveyor system may be arranged to transfer storage containers 106 between different framework structures, e.g. as is described in WO2014075937A1.

When a storage container 106 stored in one of the storage columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device 404, and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

The prior art container handling vehicles 201,401 shown in figs. 2 and 4 have some advantageous properties in view of the cantilevered vehicle 301. The properties include guidance/support provided to a storage container accommodated in the cavity and the possibility of lifting heavily loaded storage containers without increasing the weight of the vehicle to counterbalance the weight of the storage container. Both properties entail that the vehicles may have increased acceleration/ deceleration relative to the cantilevered vehicle 301. However, the potential increase in acceleration/ deceleration is not fully realized due to instability caused by both vehicles 201,401 having substantially all drive and lifting components arranged above the cavity for accommodating a storage container. WO 2019/206440 A1 was identified as the "closest prior art" during the EPO's examination procedure, and discloses, according to its abstract, "a container handling vehicle (9') for picking up storage containers (6) from a three-dimensional grid (4) of an underlying storage system (1), comprising a first set of wheels (14) arranged at opposite portions of a vehicle body (13), for moving the vehicle (9') along a first direction (X) on a rail 5 system (8) in the grid (4); a second set of wheels (15) arranged at opposite portions of the vehicle body (13), for moving the vehicle (9') along a second direction (Y) on the rail system (8) in the grid (4), the second direction (Y) being perpendicular to the first direction (X); wherein the vehicle body (13) comprises walls on all sides and forms a quadrilateral footprint, a first section and a second section arranged 10 side-by-side such that a centre point of the first section is arranged off centre relative a centre point of the footprint formed by the vehicle body (13), and wherein a size ratio of a footprint of the first section relative a footprint of the second section is at least 2:1, and wherein the first section is configured to accommodate a storage container, and the second section comprises at least a first battery (213', 15 213")".

### Summary of the invention

The present invention is defined by the attached claims and in the following:
In a first aspect, the present invention provides a container handling vehicle for moving on a rail system, the rail system comprising a first set of parallel rails and a second set of parallel rails arranged perpendicular to the first set of rails, the container handling vehicle comprising
a vehicle frame defining a first section and a second section of the container handling vehicle, the first and second section arranged side-by-side, the first section comprising a lifting device for lifting a storage container and providing a cavity in which the storage container being lifted may be accommodated;
a first set of wheels comprising a first pair of wheels and a second pair of wheels, the first and second pairs of wheels being arranged on opposite portions of the first section, the first set of wheels allowing movement of the vehicle along a first direction on the rail system during use; and
a second set of wheels comprising a third pair of wheels and a fourth pair of wheels, the third and fourth pairs of wheels arranged on opposite sides of the vehicle, each of the sides extending from one edge of the first section to one edge of the second section, allowing movement of the vehicle along a second direction on the rail system during use, the second direction being perpendicular to the first direction,
the first set of wheels being arranged to be moveable in a vertical direction relative to the vehicle frame between an upper position in which the second set of wheels allows movement of the vehicle along the second direction, and a lower position in which the first set of wheels allows movement of the vehicle along the first direction, wherein

the first pair of wheels is mounted on a first wheel support, the first wheel support being part of the second section;
the second pair of wheels is mounted on a second wheel support, the second wheel support being part of the first section;
the first wheel support and the second wheel support being arranged on opposite sides of the cavity and being vertically moveable relative to the vehicle frame;
the first wheel support and the second wheel support are interconnected by two coupler links extending in the first direction on opposite sides of the cavity, each of the coupler links being part of a corresponding linkage assembly, the linkage assemblies being configured to replicate vertical movement of the first wheel support as vertical movement of the second wheel support.

The linkage assemblies may alternatively be defined as being configured to transfer vertical movement of the first wheel support into vertical movement of the second wheel support

The first pair of wheels may be mounted at a fixed level relative to the first wheel support. The first pair of wheels may be arranged at a side of the second section which faces or is adjacent to the first section.

The second pair of wheels may be mounted at a fixed level relative to the second wheel support.

The first and second wheel supports may extend in the first direction. The first and second wheel supports may be arranged at opposite sides of the cavity.

The lifting device may comprise a lifting frame for releasable connection to a storage container.

The rail system on which the container handling vehicle may move may be a horizontal grid-based rail system and may also be termed a rail grid system.

The two coupler links are arranged on opposite sides of the cavity. This may allow a lifting frame of the lifting device and any storage container connected to the lifting frame to pass between the two coupler links when exiting or entering the cavity.

The two coupler links may be parallel and arranged at a distance being larger than a distance between two parallel sides of the lifting frame.

**In** an embodiment, the container handling vehicle may comprise an actuator assembly, the actuator assembly configured to move the first wheel support in a vertical direction between a first position and a second position, the movement of the first wheel support being transferred to the second wheel support via the coupler links of the linkage assemblies;
such that both pairs of wheels of the first set of wheels are in the upper position when the first wheel support is in the first position and that both pairs of wheels of the first set of wheels are in the lower position when the first wheel support is in the second position.

The vertical movement of the first wheel support and the second wheel support may be relative to the vehicle frame.

**In** an embodiment of the container handling vehicle, the actuator assembly is arranged in the second section.

**In** an embodiment of the container handling vehicle, the actuator assembly may comprise a wheel lift motor and a crank assembly. Alternatively, the actuator assembly may comprise a linear actuator.

**In** an embodiment of the container handling vehicle, the crank assembly and the first wheel support may be arranged at opposite sides of the second section.

**In** an embodiment of the container handling vehicle, the crank assembly and the first wheel support may be connected by a first shaft and a second shaft extending in the first direction, the first and second shafts may transfer vertical movement of the crank assembly to the first wheel support.

**In** an embodiment of the container handling vehicle, the crank assembly may comprise a coupler link connecting a first pivot element (or first link) and a second pivot element (or second link) arranged at opposite ends of the coupler link, and a crank arm.

**In** an embodiment of the container handling vehicle, the first pivot element and the second pivot element of the crank assembly may be connected to the first wheel support by the first shaft and the second shaft. The first shaft and the second shaft may be mounted to the vehicle frame via the first pivot element and the second pivot element, respectively, as well as mounted to the first wheel support by a third pivot element and a fourth pivot element.

**In** an embodiment of the container handling vehicle, the coupler link may be connected to the wheel lift motor via the crank arm. The coupler link may be connected to the wheel lift motor such that when the motor is operated, the crank arm will move the coupler link in a sideways direction, i.e. in the first direction. The movement of the coupler link will simultaneously move the first and second pivot elements which in turn will raise or lower the first and second shaft and the first wheel support in a vertical direction, e.g. move the first wheel support between the first and the second position.

In an embodiment of the container handling vehicle, each linkage assembly may comprise two intermediate links pivotably connected at opposite ends of the coupler link of the linkage assembly, each intermediate link features a first pivot coupling to the coupler link, a second pivot coupling to the vehicle frame and a third pivot coupling to one of the first and second wheel supports. The intermediate links may be configured such that the coupler links of the linkage assembly will move towards the second section when the first set of wheels is moved in a vertical direction from the lower position to the upper position.

In an embodiment of the container handling vehicle, the third pivot coupling is connected to one of the first and second wheel supports via a wheel support link, the wheel support link having a fifth pivot coupling connected to a corresponding first or second wheel support.

The wheel support link may allow vertical movement of the wheel support to be transferred to the intermediate link while avoiding any lateral forces acting on the wheel support.

In an embodiment of the container handling vehicle, the intermediate links may be angled links. The angled link may be configured such that horizontal movement of the coupler link in the second direction translates to a substantially vertical movement of the third pivot coupling. In other words, by having an angled link, movement of the third pivot coupling in the second direction is minimized when the angled link is moved around its second pivot coupling.

In an embodiment of the container handling vehicle, the first pair of wheels may be driven by a first wheel drive motor and a wheel of the third pair of wheels and a wheel of the fourth pair of wheels are driven by a second wheel drive motor, the first and second wheel drive motor may be arranged in the second section. The wheels driven by the first wheel drive motor and the second wheel drive motor may be termed driven or motorized wheels.

In an embodiment of the container handling vehicle, the first wheel drive motor may be rigidly mounted to the first wheel support and operatively connected to the first pair of wheels by at least one drive band.

Having the first wheel drive motor rigidly mounted to the first wheel support ensures that the length of the drive band is constant and avoids wear of the drive band due to stretching when the first wheel support moves between the first and second position.

In an embodiment, the container handling vehicle may comprise a drive shaft operatively connecting a wheel of the third pair of wheels and a wheel of the fourth pair of wheels to the second wheel drive motor, the drive shaft and the wheels operatively connected to the second wheel drive motor may be arranged in the second section.

In an embodiment of the container handling vehicle, the second pair of wheels, a wheel of the third pair of wheels and a wheel of the fourth pair of wheels may be non-driven wheels, the non-driven wheels may be arranged in the first section. The non-driven wheels may alternatively be termed non-motorized wheels.

In an embodiment of the container handling vehicle, the lifting device may comprise a lifting frame and at least one rotatable lifting shaft configured to raise and lower the lifting frame via a set of lifting bands. The at least one lifting shaft may be arranged in the first section above the cavity.

In an embodiment, the container handling vehicle may comprise a lift drive motor for rotating the at least one lifting shaft, the lift drive motor may be arranged in the second section.

In an embodiment, the container handling vehicle may comprise a set of replaceable or adjustable distance pins, the distance pins configured to interact with switches or sensors on the lifting frame when the lifting frame is in an upper position. The switches or sensors may be used to detect that the lifting frame is in the upper position as well as supporting the lifting frame and any storage container connected thereto to prevent movement and/or inclination of the lifting frame when in the upper position.

In an embodiment, the container handling vehicle may comprise a rechargeable battery arranged in the second section.

In an embodiment, the container handling vehicle may comprise a set of electrodes for receiving power from a charging station, the electrodes being arranged in the second section and connected to the rechargeable battery. When the set of electrodes comprises two separate electrodes, the two electrodes may be arranged on opposite sides of a vertical centre plane of the container handling vehicle, the vertical centre plane extending in the second direction (when the second section has a footprint being larger than half a grid cell, the second direction may be termed a longitudinal direction of the vehicle). The electrodes may be arranged on a side or in a region of the second section facing away from the first section. Each electrode may have an outer periphery, and the outer peripheries may be horizontally separated from each other by a distance equal to or larger than a diameter of the outer periphery. The two electrodes may be symmetrically arranged relative to the vertical centre plane.

In an embodiment, the container handling vehicle may comprise a control unit arranged in the second section.

In a second aspect, the present invention provides a storage system comprising a container handling vehicle according to any embodiment of the first aspect, the storage system comprising a framework structure having a plurality of storage columns for accommodating a vertical stack of storage containers, and a rail system upon which the vehicle may move in two perpendicular directions above the storage columns.

In an embodiment, the storage system comprises a plurality of upright members and each storage column is defined by four of the upright members.

In an embodiment of the storage system, the rail system is arranged on top of the upright members, the rail system comprising a first set of parallel rails and a second set of parallel rails arranged perpendicular to the first set of rails. The first and second set of rails providing a horizontal grid-based rail system defining a plurality of grid cells.

In an embodiment of the storage system, the footprint of the first section of the container handling vehicle may have a footprint about equal to the area of a grid cell of the rail system. The second section of the container handling vehicle may have a footprint less than or equal to the area of a grid cell. The footprint of the container handling vehicle is the horizontal area occupied or defined by the horizontal periphery of the container handling vehicle. The footprint of the container handling vehicle is equal to or less than the area of two adjacent grid cells. When the first section has a footprint about equal to the area of a grid cell of the rail system and the second section has a footprint larger than the area of half a grid cell, the first direction may be termed a lateral direction and the second direction may be termed a longitudinal direction.

In an embodiment of the storage system, the container handling vehicle may have the first pair of wheels and the second pair of wheels arranged at rails on opposite sides of a grid opening over which the first section is positioned, the rails defining two sides of a grid cell.

A grid cell may be defined as the cross-sectional area between the vertical centre planes of opposed rails running in the X direction and opposed rails running in the Y direction.

A grid cell opening may be defined as the open cross-sectional area between two opposed rails running in the X direction and two opposed rails running in the Y direction.

In a third aspect, the present invention provides a method of changing travel direction of a container handling vehicle for moving on a rail system, the rail system comprising a first set of parallel rails and a second set of parallel rails arranged perpendicular to the first set of rails, the container handling vehicle comprising
a vehicle frame defining a first section and a second section of the container handling vehicle, the first and second sections arranged side-by-side, the first section comprising a lifting device for lifting a storage container and providing a cavity in which the storage container being lifted may be accommodated;
a first set of wheels comprising a first pair of wheels and a second pair of wheels, the first and second pairs of wheels being arranged on opposite portions of the first section, the first set of wheels allowing movement of the vehicle along a first direction on the rail system during use; and
a second set of wheels comprising a third pair of wheels and a fourth pair of wheels, the third and fourth pairs of wheels arranged on opposite sides of the vehicle, each of the sides extending from one edge of the first section to one edge of the second section, allowing movement of the vehicle along a second direction on the rail system during use, the second direction being perpendicular to the first direction,

the first set of wheels being arranged to be moveable in a vertical direction relative to a remainder of the vehicle frame between an upper position in which the second set of wheels allows movement of the vehicle along the second direction, and a lower position in which the first set of wheels allows movement of the vehicle along the first direction, wherein
the first pair of wheels is mounted on a first wheel support, the first wheel support being part of the second section;
the second pair of wheels is mounted on a second wheel support, the second wheel support being part of the first section;
the first wheel support and the second wheel support being arranged on opposite sides of the cavity and being vertically moveable relative to the remainder of the vehicle frame;
the first wheel support and the second wheel support are interconnected by two coupler links extending in the first direction on opposite sides of the cavity, each of the coupler links being part of a linkage assembly, the linkage assemblies being configured to replicate vertical movement of the first wheel support as vertical movement of the second wheel support, and the method comprises the steps of:
   - moving the first wheel support in a vertical direction; and
   - simultaneously replicating the vertical movement of the first wheel support as vertical movement of the second wheel support via the linkage assemblies, such that the first set of wheels moves between the upper position and the lower position.

In an embodiment of the method according to the third aspect, the container handling vehicle comprises an actuator assembly arranged in the second section, the actuator assembly comprises a motor and a crank assembly, the method comprises the step of:
- driving the motor to actuate the crank assembly, such that the first wheel support is moved in the vertical direction by a first shaft and a second shaft connected to the first wheel support and the crank assembly.

The container handling vehicle of the method according to the third aspect may comprise any of the features of the container handling vehicle of the first aspect.

In a fourth aspect, the present invention provides a method of changing travel direction for a container handling vehicle according to any embodiment of the first aspect, the method comprising the steps of:
- moving the first wheel support in a vertical direction; and
- simultaneously transferring the vertical movement of the first wheel support to the second wheel support via the linkage assemblies.

In an embodiment of the method, the simultaneous transfer of the vertical movement of the first wheel support to the second wheel support is obtained by vertically moving the wheel support links, rotating the intermediate links around their second pivot couplings and moving the coupler links in the second direction.

In an embodiment, the method comprises the step of:
- operating the actuator assembly to move the first wheel support in a vertical direction.

### Brief description of the drawings

Embodiments of the invention are described in detail by way of example only and with reference to the following drawings:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilevered section for carrying storage containers underneath.
Fig. 4 is a perspective view of a prior art container handling vehicle, wherein a container lifting assembly is shown.
Fig. 5 is a perspective view of the container handling vehicle in fig. 4 without side panels.
Figs. 6 and 7 are perspective views of an exemplary container handling vehicle, wherein a second set of wheels are in a lowermost position.
Fig. 8 is a side view of the container handling vehicle in fig. 6.
Figs. 9 and 10 are perspective views of the container handling vehicle in fig. 6, wherein the second set of wheels are in an upper position.
Fig. 11 is a side view of the container handling vehicle in fig. 9.
Fig. 12 is a perspective view of the exemplary container handling vehicle.
Fig. 13 is a cross-sectional view of the container handling vehicle in fig. 8.
Fig. 14 is a cross-sectional view of the container handling vehicle in fig. 11.
Figs. 15a and 15b are perspective views of the exemplary container handling vehicle comprising side panels.

### Detailed description of the invention

In the following, embodiments of the invention will be discussed in more detail by way of example only and with reference to the appended drawings.

As discussed in the background section, the prior art container handling vehicles comprising a cavity for accommodating a storage container, see figs. 2, 4 and 5, have certain advantageous features. In particular, the guidance/support provided to a storage container when accommodated in the cavity entails that the vehicles may have increased acceleration/retardation relative to the cantilevered container handling vehicle 301 shown in fig. 3. However, the potential increase in acceleration/retardation is not fully realized due to instability of the vehicles. The instability is caused by both vehicles 201,401 having most of the drive, power, control and lifting components arranged above the cavity, providing a high centre of gravity.

The vehicle body of the container handling vehicle in fig. 4 and 5 comprises a first section S1 and a second section S2 arranged side by side. The configuration of having a first section S1 and a second section S2 is disclosed in PCT/EP2018/077732. Due to the increased footprint relative to the footprint of the vehicle in fig. 2, the stability is slightly improved. However, as shown in fig, 5, the prior art container handling vehicle 401 features at least a control unit 19, a replaceable battery 18 and wheel lifting components, including a wheel lift shaft 20, arranged above the cavity 26. The wheel lift shaft 20 extends above the cavity connecting two opposite wheel lift plates 21a,21b. It is noted that the wheel drive motors of the container handling vehicle 401 are not arranged above the cavity. The positioning of the wheel motors is made possible by use of wheel hub motors 41. An advantage of using wheel hub motors is that all wheels of the container handling vehicle may be driven wheels providing increased traction of the wheels. Disadvantages of using multiple wheel hub motors is the relatively high cost and potentially increased service/maintenance. In addition, the power and torque that may be provided by the wheel hub motors are restricted since they must have a size allowing them to fit within the vehicle without extending into the cavity of the first section or obstructing each other in the second section.

The present invention provides a container handling vehicle having improved stability and traction of the drive wheels. Further advantages of the container handling vehicle described below includes lower service costs.

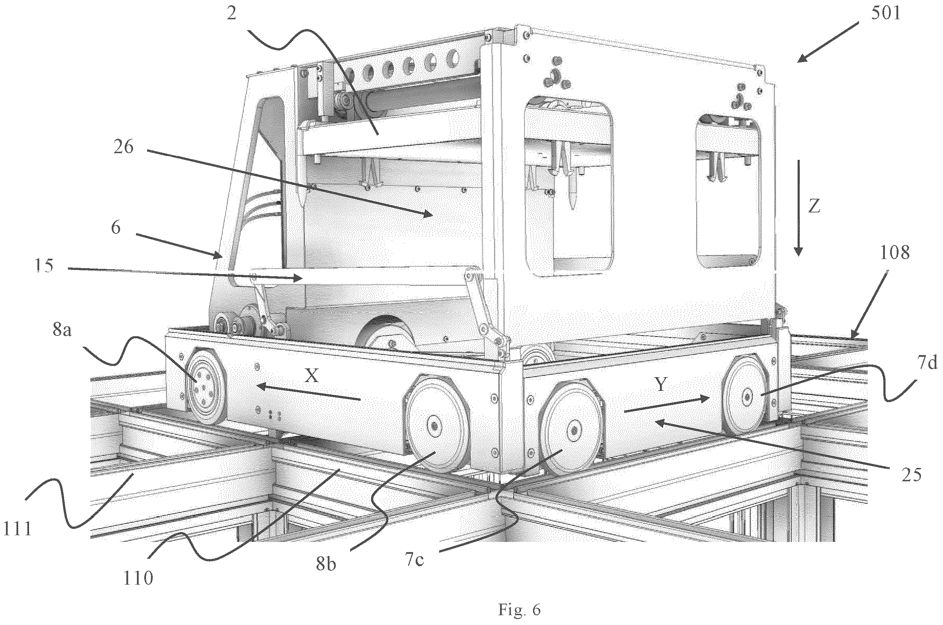

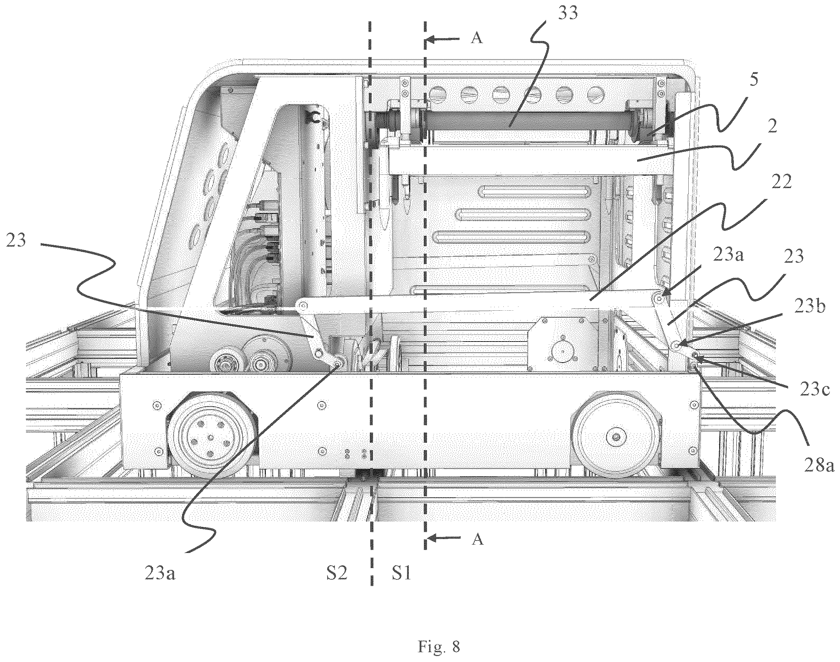

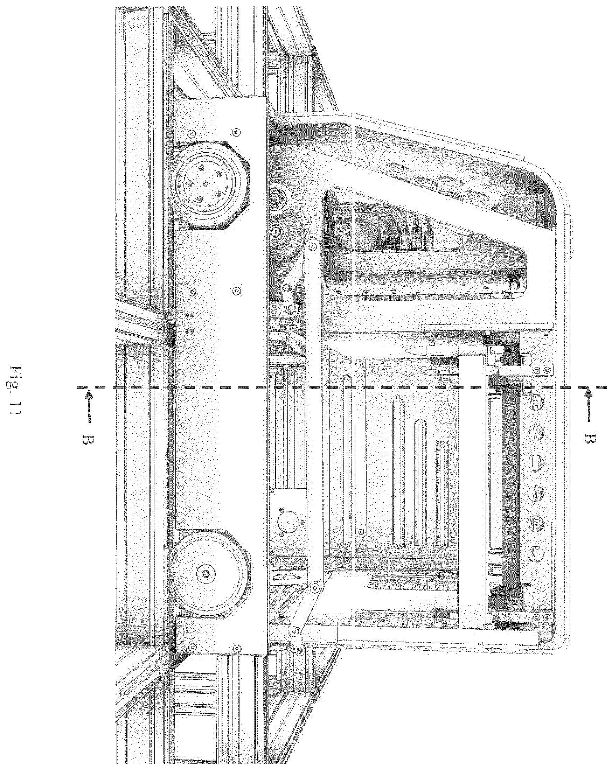

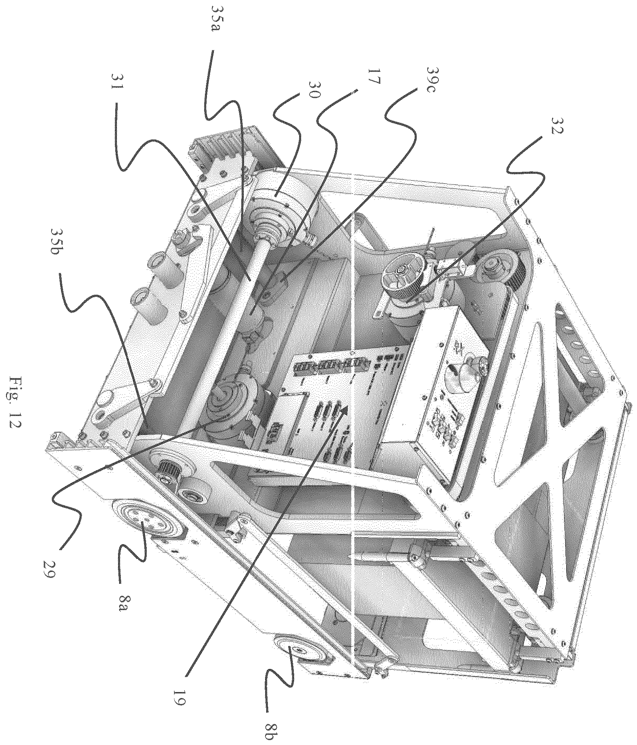

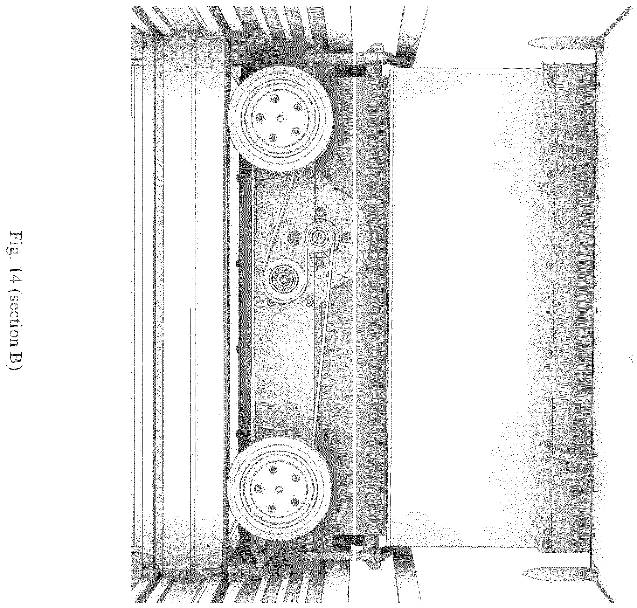

An exemplary embodiment of a container handling vehicle 501 according to the invention is shown in figs. 6-15.

The container handling vehicle is suitable for use in prior art storage systems as discussed in the background section and shown in fig. 1.

The container handling vehicle 501 features a vehicle frame 6 defining a first section S1 and a second section S2 of the container handling vehicle 501 arranged side-by-side, similar to the vehicle frame of the prior art vehicles 401 discussed above.

The first section S1 comprises a lifting device for lifting a storage container 106 and provides a cavity 26 in which the storage container 106 may be accommodated. The lifting device has a lifting frame 2 and two rotatable lifting shafts 33 configured to raise and lower the lifting frame 2 via a set of lifting bands 5. A lift drive motor 32 for driving the lifting device, i.e. rotating the lifting shafts, is arranged in the second section S2.

The container handling vehicle has a first set of wheels and a second set of wheels configured to move the vehicle upon on a rail system 108. The rail system comprises a first set of parallel rails 110 and a second set of parallel rails 111 arranged perpendicular to the first set of rails 110. The rail system is arranged in a horizontal, grid-based manner.

The first set of wheels has a first pair of wheels 7a,7b and a second pair of wheels 7c,7d. The first and second pairs of wheels are arranged on opposite portions of the first section S1 of the container handling vehicle and allows movement of the vehicle 501 along a first direction Y on the rail system 108.

The second set of wheels has a third pair of wheels 8a,8b and a fourth pair of wheels 8c,8d. The third and fourth pairs of wheels are arranged on opposite sides of the vehicle, each of the sides extending from one edge of the first section S1 to one edge of the second section S2. The second set of wheels allows movement of the vehicle 501 along a second direction X on the rail system 108, the second direction X being perpendicular to the first direction Y.

To allow a change of direction in which the container handling vehicle 501 travels upon the rail system 108, the first set of wheels is arranged to be moveable in a vertical direction Z relative to the vehicle frame 6 between an upper position in which the second set of wheels allows movement of the vehicle 501 along the second direction X, and a lower position in which the first set of wheels allows movement of the vehicle 501 along the first direction Y.

The vertical movement of the first set of wheels 7a-7d is obtained by a wheel lift mechanism featuring a first wheel support 24, a second wheel support 25, an actuator assembly 17,27 configured to vertically move the first wheel support 24 relative to the vehicle frame 6, and two linkage assemblies 15 configured to transfer the vertical movement of the first wheel support 24 into vertical movement of the second wheel support 25 relative to the vehicle frame 6.

The first pair of wheels 7a,7b is mounted on the first wheel support 24 which can be considered to be part of the second section S2, and the second pair of wheels 7c,7d is mounted on the second wheel support 25 which is part of the first section S1. The first wheel support 24 and the second wheel support 25 are arranged on opposite sides of the cavity 26. The first wheel support 24 and the second wheel support 25 extend in the first direction Y.

Each of the linkage assemblies 15 comprises a coupler link 22, two angled links 23 (e.g., bell cranks or intermediate links) pivotably connected at opposite ends of the coupler link 22 and two wheel support links 28 connecting a corresponding angled link 23 to one of the first and second wheel supports 24,25.

Each of the angled links 23 features a first pivot coupling 23a to a coupler link 22, a second pivot coupling 23b to the vehicle frame 6 and a third pivot coupling 23c connected to a corresponding first or second wheel support 24,25 via a wheel support link 28. The wheel support link 28 having a fifth pivot coupling 28a connected to the corresponding first or second wheel support.

The angle of the angled links 23 minimizes lateral movement of the third pivot couplings 23c in the second direction X when the angled links 23 are pivoted around their second pivot couplings 23b to move the third pivot couplings 23 in a vertical direction.

The wheel support links 28 allow vertical movement of the wheel supports 24,25 to be transferred via the angled links 23 while avoiding any lateral forces acting on the wheel supports 24,25.

The coupler links 22 extend in the second direction X on opposite sides of the cavity 26, allowing a storage container 106 to be accommodated between them.

The first pair of wheels 7a,7b may be driven in the first direction Y by a first wheel drive motor 29. A wheel 8a of the third pair of wheels and a wheel 8d of the fourth pair of wheels may be driven in the second direction X by a second wheel drive motor 30. The first and second wheel drive motor are arranged in the second section S2.

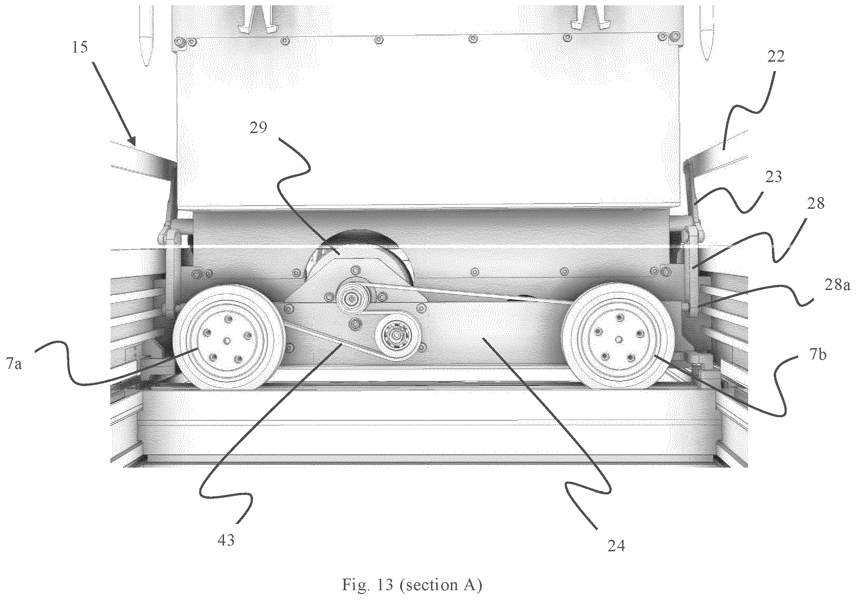

The first wheel drive motor 29 is rigidly mounted to the first wheel support 24 and is operatively connected to the first pair of wheels 7a,7b by a drive band 43, see fig. 13. Having the first wheel drive motor 29 rigidly mounted to the first wheel support 24 ensures that the length of the drive band 43 is constant and avoids wear of the band due to stretching when the first wheel support 24 moves between the first and second position.

The second wheel drive motor 30 is operatively connected to the driven wheel 8a of the third pair of wheels and the driven wheel 8d of the fourth pair of wheels by a drive shaft 31. The second wheel drive motor 30 and the drive shaft 31 are arranged in the second section S2.

In alternative embodiments of the container handling vehicle, the remaining non-motorized wheels of the container handling vehicle in figs. 6-15, i.e. the second pair of wheels 7c,7d, a wheel 8b of the third pair of wheels and a wheel 8c of the fourth pair of wheels may be driven by wheel hub motors. However, the addition of further wheel drive motors is expensive and not considered to provide significant advantages related to speed and/or acceleration to warrant the addition in all circumstances. Consequently, using a combination of driven and non-driven wheels can provide a cost-effective solution with minimal performance difference. Weight is also reduced through avoiding the motor weights of the additional driven wheels.

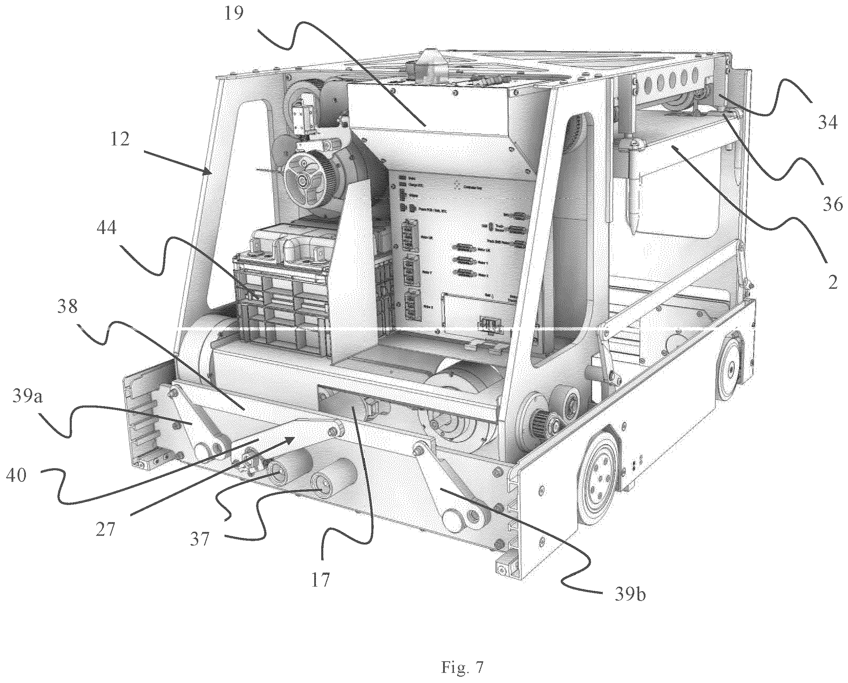

The first wheel support 24 may be moved in the vertical direction between the first position and the second position by a crank assembly 27 driven by a wheel lift motor 17, see figs. 7, 10 and 12. The crank assembly features a coupler link 38 connecting a first pivot element 39a and a second pivot element 39b arranged at opposite ends of the coupler link 38, and a crank arm 40.

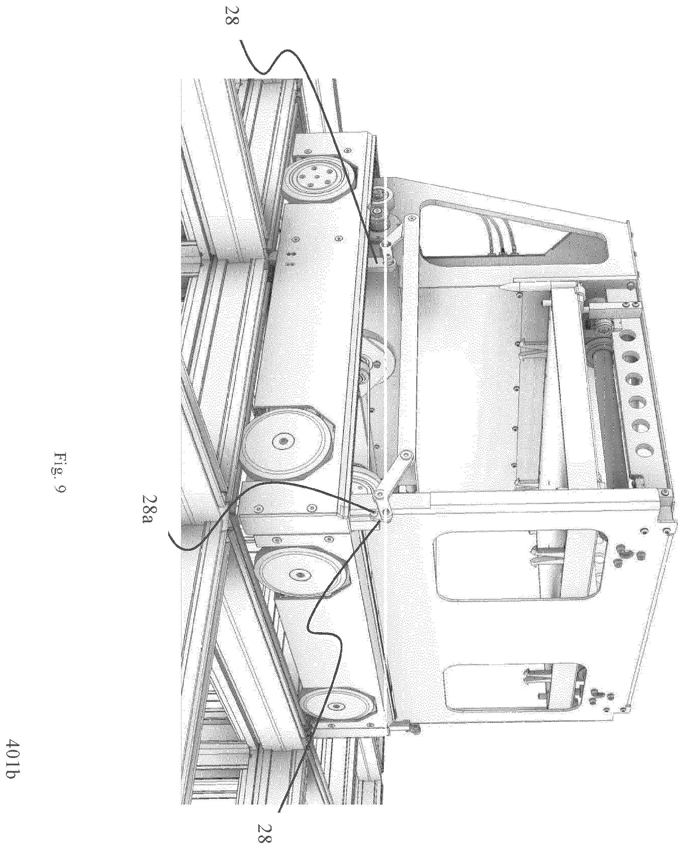

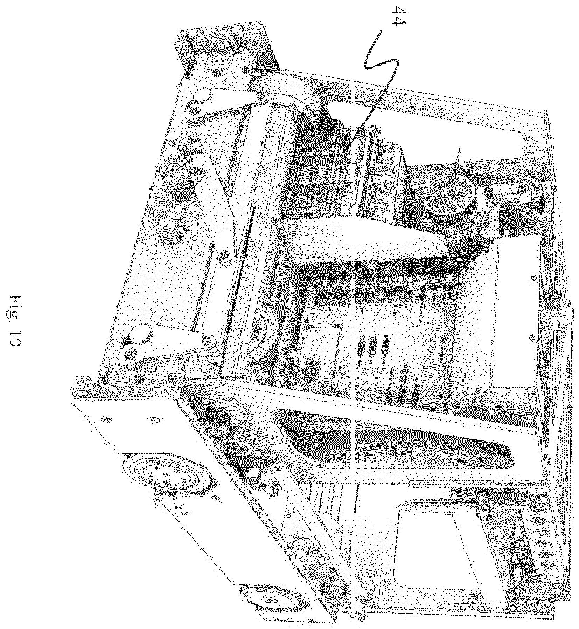

The first pivot element 39a and the second pivot element 39b are connected to the first wheel support 24 by a first shaft 35a and a second shaft 35b, see figs. 9 and 10. The first shaft 25a and the second shaft 25b are mounted to the vehicle frame 12 via the first pivot element 39a and the second pivot element 39b, respectively, as well as mounted to the first wheel support 24 by a third pivot element 39c and a fourth pivot element (not visible in the drawings, similar to the third pivot element).

The coupler link 38 is connected to the wheel lift motor 17 via the crank arm 40. When the wheel lift motor 17 is operated, the crank arm 40 will move the coupler link 38 in a sideways direction, i.e. in the first direction Y. The movement of the coupler link 38 will simultaneously move the first and second pivot elements 39a,39b, which in turn will raise or lower the first and second shaft 35a,35b and the first wheel support 24 in a vertical direction, e.g. between the first and the second position. By having the crank assembly 27 and the first wheel support arranged at opposite sides of the second section S2, the available space in the second section is optimized. The optimized space allows for the positioning of the wheel drive motors 29,30 and the drive shaft 31 at a lower level in the second section S2 to improve the stability of the vehicle.

Power to drive the motors of the container handling vehicle 501 is provided by a rechargeable battery 44 arranged in the second section S2. The rechargeable battery 44 is connected to a set of electrodes 37. The electrodes 37 are configured to receive power from a charging station. The two electrodes 37 are arranged on opposite sides of a vertical centre plane of the container handling vehicle, the vertical centre plane extending in the second direction X. An advantageous effect of having the electrodes 37 separated in this manner, i.e. symmetrically arranged relative to the vertical centre plane, is that lateral skewing of the container handling vehicle relative to the second direction X during initial connection to a charging station is minimized. A suitable charging station is disclosed in e.g. PCT/EP2021/074340.

A control unit 19 for controlling at least the drive components, i.e. the first and second electric motor 29,31, the wheel lift motor 17 and the lift drive motor 32, is arranged in the second section S2. By having all drive components and the rechargeable battery 44 arranged in the second section S2, cabling from the control unit 19 to any of the controllable components is minimized.

Substantially all drive, power and control components of the container handling vehicle 501 are arranged in the second section S2. The weight of these components is mainly supported by the driven wheels 7a,7b,8a,8d in or at the second section S2 such that the driven wheels will have excellent traction allowing high acceleration of the vehicle.

A set of replaceable distance pins 34 are arranged above the lifting frame 2, see fig. 7. The distance pins 34 are configured to interact with switches 36 or sensors on an upper portion of the lifting frame 2 when the lifting frame 2 is in an upper position.

The distance pins 34 ensure that the operational efficiency of the container handling vehicle 501 may be optimized with respect to the height of the storage containers 106 being lifted. If the container handling vehicle 501 is to be used for lower storage containers, longer distance pins may be installed to ensure that the storage containers 106 are not lifted higher than required for entering the cavity 26.

In alternative embodiments, the distance pins 34 may be adjustable, i.e. the distance pins may have an adjustable height, instead of being replaceable. Adjustable distance pins may for instance be obtained by having telescopic or foldable distance pins.

The container handling vehicle 501 comprises four of the distance pins 34 arranged to interact with the lifting frame 2 at four corner sections. The distance pins 34 may also be configured to stabilize the lifting frame 2, and any storage container 106 connected thereto, when the lifting frame 2 is in an upper position.

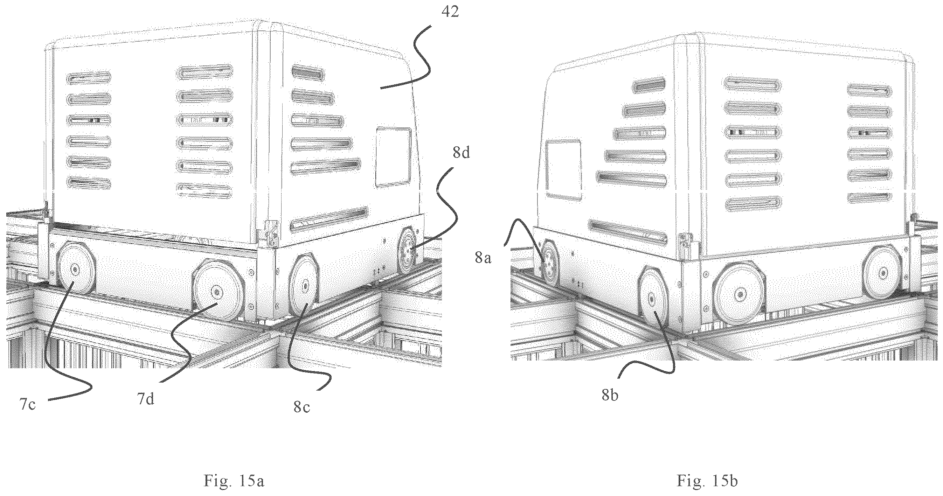

In fig.15a,15b, the container handling vehicle is shown with cover plates 42. The cover plates 42 and the vehicle frame 6 provides a vehicle body of the container handling vehicle.

### List of reference numbers

- 1: Prior art automated storage and retrieval system
- 2: Lifting frame
- 3: Container connector
- 4: Guiding pin
- 5: Lifting band
- 6: Vehicle frame
- 7a-7d: Wheels of the first set of wheels
- 8a-8d: Wheels of the second set of wheels
- 12: Vehicle frame
- 15: Linkage assembly
- 17: Wheel lift motor
- 18: Replaceable battery
- 19: Control unit
- 20: Wheel lift shaft
- 21a,21b: Wheel lift plates
- 22: Coupler link
- 23: Intermediate link
- 24: First wheel support
- 25: Second wheel support
- 26: Cavity
- 27: Crank assembly
- 28: Wheel support link
- 29: First wheel drive motor
- 30: Second wheel drive motor
- 31: Drive shaft
- 32: Lift drive motor
- 33: Lifting shaft
- 34: Distance pins
- 35a,35b: First shaft, second shaft
- 36: Switch, sensor
- 37: Electrodes
- 38: Coupler link
- 39a,39b: First pivot element, second pivot element
- 40: Crank arm
- 41: Wheel hub motor
- 42: Cover plates
- 43: Drive band
- 44: Rechargeable battery

- 100: Framework structure
- 102: Upright members of framework structure
- 103: Horizontal members of framework structure
- 105: Storage column
- 106: Storage container
- 106': Particular position of storage container
- 107: Stack
- 108: Rail system
- 110: Parallel rails in second direction (X)
- 110a: First rail in second direction (X)
- 110b: Second rail in second direction (X)
- 111: Parallel rail in first direction (Y)
- 111a: First rail of first direction (Y)
- 111b: Second rail of first direction (Y)
- 112: Access opening
- 119: First port column
- 120: Second port column
- 201: Prior art container handling vehicle
- 201a: Vehicle body of the container handling vehicle 201
- 201b: Drive means / wheel arrangement, first direction (Y)
- 201c: Drive means / wheel arrangement, second direction (X)
- 301: Prior art cantilever container handling vehicle
- 301a: Vehicle body of the container handling vehicle 301
- 301b: Drive means in second direction (X)
- 301c: Drive means in first direction (Y)
- 401: Prior art container handling vehicle
- 401a: Vehicle body of the container handling vehicle 401
- 401b: Drive means in first direction (Y)
- 401c: Drive means in second direction (X)
- X: Second direction
- Y: First direction
- Z: Third direction

## Claims

1. A container handling vehicle (501) for moving on a rail system (108), the rail system comprising a first set of parallel rails (110) and a second set of parallel rails (111) arranged perpendicular to the first set of rails (110), the container handling vehicle comprising:
a vehicle frame (6) defining a first section (S1) and a second section (S2) of the container handling vehicle, the first and second sections arranged side-by-side, the first section (S1) comprising a lifting device (2) for lifting a storage container (106) and providing a cavity (26) in which the storage container being lifted may be accommodated;
a first set of wheels comprising a first pair of wheels (7a,7b) and a second pair of wheels (7c,7d), the first and second pairs of wheels being arranged on opposite portions of the first section (S1), the first set of wheels allowing movement of the vehicle (501) along a first direction (Y) on the rail system (108) during use; and
a second set of wheels comprising a third pair of wheels (8a,8b) and a fourth pair of wheels (8c,8d), the third and fourth pairs of wheels arranged on opposite sides of the vehicle, each of the sides extending from one edge of the first section (S1) to one edge of the second section (S2), allowing movement of the vehicle (501) along a second direction (X) on the rail system (108) during use, the second direction (X) being perpendicular to the first direction (Y),
the first set of wheels being arranged to be moveable in a vertical direction (Z) relative to a remainder of the vehicle frame between an upper position in which the second set of wheels allows movement of the vehicle (501) along the second direction (X), and a lower position in which the first set of wheels allows movement of the vehicle (501) along the first direction (Y), wherein:
the first pair of wheels (7a,7b) is mounted on a first wheel support (24), the first wheel support being part of the second section (S2);
the second pair of wheels (7c,7d) is mounted on a second wheel support (25),
the second wheel support being part of the first section (S1), the container handling vehicle (501) being **characterized by** the first wheel support and the second wheel support being arranged on opposite sides of the cavity (26) and being vertically moveable relative to the remainder of the vehicle frame (6);
the first wheel support (24) and the second wheel support (25) are interconnected by two coupler links (22) extending in the first direction (Y) on opposite sides of the cavity (6), each of the coupler links being part of a linkage assembly (15), the linkage assemblies being configured to replicate vertical movement of the first wheel support (24) as vertical movement of the second wheel support (25).

2. A container handling vehicle according to claim 1, comprising an actuator assembly (17,27), the actuator assembly configured to move the first wheel support (24) in a vertical direction between a first position and a second position, the movement of the first wheel support (24) being transferred to the second wheel support (25) via the coupler links (22) of the linkage assemblies (15), such that both pairs of wheels of the first set of wheels are in the upper position when the first wheel support (24) is in the first position and that both pairs of wheels of the first set of wheels are in the lower position when the first wheel support (24) is in the second position, and
optionally wherein the actuator assembly (17,27) is arranged in the second section (S2).

3. A container handling vehicle according to claim 2, wherein the actuator assembly comprises a motor (17) and a crank assembly (27), or a linear actuator, and
optionally comprising the motor (17) and the crank assembly (27), wherein the crank assembly (27) and the first wheel support (24) are arranged in opposite regions of the second section (S2).

4. A container handling vehicle according to any of the preceding claims, wherein each linkage assembly (15) comprises two intermediate links (23) pivotably connected at opposite ends of the coupler link (22), each intermediate link (23) features a first pivot coupling (23a) to the coupler link, a second pivot coupling (23b) to the vehicle frame (6) and a third pivot coupling (23c) to one of the first and second wheel supports, and
optionally wherein each of the third pivot couplings (23c) is connected to one of the first and second wheel supports via a wheel support link (28), the wheel support link having a fifth pivot coupling (28a) connected to a corresponding first or second wheel support.

5. A container handling vehicle according to claim 4, wherein the intermediate links are angled links (23).

6. A container handling vehicle according to any of the preceding claims, wherein the first pair of wheels (7a,7b) is driven by a first wheel drive motor (29) and a wheel (8a) of the third pair of wheels, and a wheel (8d) of the fourth pair of wheels are driven by a second wheel drive motor (30), the first and second wheel drive motor arranged in the second section (S2), and
optionally wherein the first wheel drive motor (29) is rigidly mounted to the first wheel support (24) and operatively connected to the first pair of wheels (7a,7b) by at least one drive band (43).

7. A container handling vehicle according to any of the preceding claims, comprising a drive shaft (31) operatively connecting a wheel (8a) of the third pair of wheels and a wheel (8d) of the fourth pair of wheels to the second wheel drive motor (30), the drive shaft and the wheels (8a,8,d) operatively connected to the second wheel drive motor (31) being arranged in the second section (S2).

8. A container handling vehicle according to any of the preceding claims, wherein the second pair of wheels (7c,7d), a wheel (8b) of the third pair of wheels, and a wheel (8c) of the fourth pair of wheels are non-driven wheels, the non-driven wheels being arranged in the first section (S1).

9. A container handling vehicle according to any of the preceding claims, wherein the lifting device comprises a lifting frame (2) and at least one rotatable lifting shaft (33) configured to raise and lower the lifting frame (2) via a set of lifting bands (5), the lifting shaft arranged in the first section (S1) above the cavity (26), and
optionally comprising a lift drive motor (32) for rotating the at least one lifting shaft (33), the lift drive motor (32) being arranged in the second section (S2).

10. A container handling vehicle according to any of the preceding claims, comprising a set of replaceable or adjustable distance pins (34), the distance pins configured to interact with switches (36) or sensors on the lifting frame (2) when the lifting frame is in an upper position.

11. A container handling vehicle according to any of the preceding claims, comprising a rechargeable battery (44) arranged in the second section (S2), and
optionally comprising a set of electrodes (37) for receiving power from a charging station, the electrodes being arranged in the second section (S2) and connected to the rechargeable battery (44).

12. A container handling vehicle according to any of the preceding claims, comprising a control unit (19) arranged in the second section (S2).

13. A storage system comprising a container handling vehicle (501) according to any of the preceding claims, the storage system comprising a framework structure (100) having a plurality of storage columns (105) for accommodating a vertical stack of storage containers (106), and a rail system (108) upon which the vehicle may move in two perpendicular directions above the storage columns.

14. A method of changing travel direction of a container handling vehicle (501) for moving on a rail system (108), the rail system comprising a first set of parallel rails (110) and a second set of parallel rails (111) arranged perpendicular to the first set of rails (110), the container handling vehicle comprising:
a vehicle frame (6) defining a first section (S1) and a second section (S2) of the container handling vehicle, the first and second sections arranged side-by-side, the first section (S1) comprising a lifting device (2) for lifting a storage container (106) and providing a cavity (26) in which the storage container being lifted may be accommodated;
a first set of wheels comprising a first pair of wheels (7a,7b) and a second pair of wheels (7c,7d), the first and second pairs of wheels being arranged on opposite portions of the first section (S1), the first set of wheels allowing movement of the vehicle (501) along a first direction (Y) on the rail system (108) during use; and
a second set of wheels comprising a third pair of wheels (8a,8b) and a fourth pair of wheels (8c,8d), the third and fourth pairs of wheels arranged on opposite sides of the vehicle, each of the sides extending from one edge of the first section (S1) to one edge of the second section (S2), allowing movement of the vehicle (501) along a second direction (X) on the rail system (108) during use, the second direction (X) being perpendicular to the first direction (Y),
the first set of wheels being arranged to be moveable in a vertical direction (Z) relative to a remainder of the vehicle frame between an upper position in which the second set of wheels allows movement of the vehicle (501) along the second direction (X), and a lower position in which the first set of wheels allows movement of the vehicle (501) along the first direction (Y), wherein
the first pair of wheels (7a,7b) is mounted on a first wheel support (24), the first wheel support being part of the second section (S2);
the second pair of wheels (7c,7d) is mounted on a second wheel support (25),
the second wheel support being part of the first section (S1), the method being **characterized by**
the first wheel support and the second wheel support being arranged on opposite sides of the cavity (26) and being vertically moveable relative to the remainder of the vehicle frame (6);
the first wheel support (24) and the second wheel support (25) are interconnected by two coupler links (22) extending in the first direction (Y) on opposite sides of the cavity (6), each of the coupler links being part of a linkage assembly (15), the linkage assemblies being configured to replicate vertical movement of the first wheel support (24) as vertical movement of the second wheel support (25), and the method comprises the steps of:
- moving the first wheel support (24) in a vertical direction; and
- simultaneously replicating the vertical movement of the first wheel support as vertical movement of the second wheel support via the linkage assemblies, such that the first set of wheels moves between the upper position and the lower position.

15. A method according to claim 14, wherein the container handling vehicle comprises an actuator assembly (17,27) arranged in the second section (S2), the actuator assembly comprises a motor (17) and a crank assembly (27), the method comprises the step of:
- driving the motor (17) to actuate the crank assembly, such that the first wheel support (24) is moved in the vertical direction by a first shaft (35a) and a second shaft (35b) connected to the first wheel support and the crank assembly.

## Patentansprüche

1. Behälterhandhabungsfahrzeug (501) zum Bewegen auf einem Schienensystem (108), wobei das Schienensystem einen ersten Satz paralleler Schienen (110) und einen senkrecht zum ersten Satz von Schienen (110) angeordneten zweiten Satz paralleler Schienen (111) umfasst, wobei das Behälterhandhabungsfahrzeug Folgendes umfasst:
einen Fahrzeugrahmen (6), der einen ersten Abschnitt (S1) und einen zweiten Abschnitt (S2) des Behälterhandhabungsfahrzeugs definiert, wobei der erste und der zweite Abschnitt nebeneinander angeordnet sind, wobei der erste Abschnitt (S1) eine Hebevorrichtung (2) zum Anheben eines Lagerbehälters (106) umfasst und einen Hohlraum (26) bereitstellt, in dem der angehobene Lagerbehälter aufgenommen werden kann;
einen ersten Satz von Rädern, der ein erstes Paar von Rädern (7a, 7b) und ein zweites Paar von Rädern (7c, 7d) umfasst, wobei das erste und das zweite Paar von Rädern auf gegenüberliegenden Teilen des ersten Abschnitts (S1) angeordnet sind, wobei während der Verwendung der erste Satz von Rädern eine Bewegung des Fahrzeugs (501) entlang einer ersten Richtung (Y) auf dem Schienensystem (108) ermöglicht; und
einen zweiten Satz von Rädern, der ein drittes Paar von Rädern (8a, 8b) und ein viertes Paar von Rädern (8c, 8d) umfasst, wobei das dritte und vierte Paar von Rädern auf gegenüberliegenden Seiten des Fahrzeugs angeordnet sind, wobei sich jede der Seiten von einer Kante des ersten Abschnitts (S1) zu einer Kante des zweiten Abschnitts (S2) erstreckt und während der Verwendung eine Bewegung des Fahrzeugs (501) entlang einer zweiten Richtung (X) auf dem Schienensystem (108) ermöglicht, wobei die zweite Richtung (X) senkrecht zur ersten Richtung (Y) ist,
wobei der erste Satz von Rädern so angeordnet ist, dass er in einer vertikalen Richtung (Z) relativ zu einem Rest des Fahrzeugrahmens zwischen einer oberen Position, in der der zweite Satz von Rädern eine Bewegung des Fahrzeugs (501) entlang der zweiten Richtung (X) ermöglicht, und einer unteren Position, in der der erste Satz von Rädern eine Bewegung des Fahrzeugs (501) entlang der ersten Richtung (Y) ermöglicht, beweglich ist, wobei:
das erste Paar von Rädern (7a, 7b) an einem ersten Radträger (24) montiert ist, wobei der erste Radträger Teil des zweiten Abschnitts (S2) ist;
das zweite Paar von Rädern (7c, 7d) an einem zweiten Radträger (25) montiert ist,
der zweite Radträger Teil des ersten Abschnitts (S1) ist, wobei das Behälterhandhabungsfahrzeug (501) durch Folgendes gekennzeichnet ist
der erste Radträger und der zweite Radträger sind auf gegenüberliegenden Seiten des Hohlraums (26) angeordnet und relativ zum Rest des Fahrzeugrahmens (6) vertikal beweglich;
der erste Radträger (24) und der zweite Radträger (25) sind durch zwei Kopplungsverbindungsglieder (22) miteinander verbunden, die sich in der ersten Richtung (Y) auf gegenüberliegenden Seiten des Hohlraums (6) erstrecken, wobei jedes der Kopplungsverbindungsglieder Teil einer Verbindungsanordnung (15) ist, wobei die Verbindungsanordnungen dazu ausgelegt sind, eine vertikale Bewegung des ersten Radträgers (24) als eine vertikale Bewegung des zweiten Radträgers (25) zu replizieren.

2. Behälterhandhabungsfahrzeug nach Anspruch 1, umfassend eine Aktuatoranordnung (17, 27), wobei die Aktuatoranordnung dazu ausgelegt ist, den ersten Radträger (24) in einer vertikalen Richtung zwischen einer ersten Position und einer zweiten Position zu bewegen, wobei die Bewegung des ersten Radträgers (24) über die Kopplungsverbindungsglieder (22) der Verbindungsanordnungen (15) so auf den zweiten Radträger (25) übertragen wird, dass sich beide Paare von Rädern des ersten Satzes von Rädern in der oberen Position befinden, wenn sich der erste Radträger (24) in der ersten Position befindet, und dass sich beide Paare von Rädern des ersten Satzes von Rädern in der unteren Position befinden, wenn sich der erste Radträger (24) in der zweiten Position befindet, und
optional wobei die Aktuatoranordnung (17, 27) in dem zweiten Abschnitt (S2) angeordnet ist.

3. Behälterhandhabungsfahrzeug nach Anspruch 2, wobei die Aktuatoranordnung einen Motor (17) und eine Kurbelanordnung (27) oder einen Linearaktuator umfasst, und
optional umfassend den Motor (17) und die Kurbelanordnung (27), wobei die Kurbelanordnung (27) und der erste Radträger (24) in gegenüberliegenden Bereichen des zweiten Abschnitts (S2) angeordnet sind.

4. Behälterhandhabungsfahrzeug nach einem der vorhergehenden Ansprüche, wobei jede Verbindungsanordnung (15) zwei Zwischenverbindungsglieder (23) umfasst, die schwenkbar an gegenüberliegenden Enden des Kopplungsverbindungsglieds (22) verbunden sind, wobei jedes Zwischenverbindungsglied (23) eine erste Schwenkkopplung (23a) mit dem Kopplungsverbindungsglied, eine zweite Schwenkkopplung (23b) mit dem Fahrzeugrahmen (6) und eine dritte Schwenkkopplung (23c) mit einem des ersten und des zweiten Radträgers aufweist, und
optional wobei jede der dritten Schwenkkopplungen (23c) über ein Radträgerverbindungsglied (28) mit einem des ersten und des zweiten Radträgers verbunden ist, wobei das Radträgerverbindungsglied eine fünfte Schwenkkopplung (28a) aufweist, die mit einem entsprechenden ersten oder zweiten Radträger verbunden ist.

5. Behälterhandhabungsfahrzeug nach Anspruch 4, wobei die Zwischenverbindungsglieder abgewinkelte Verbindungsglieder (23) sind.

6. Behälterhandhabungsfahrzeug nach einem der vorhergehenden Ansprüche, wobei das erste Paar von Rädern (7a, 7b) durch einen ersten Radantriebsmotor (29) angetrieben wird und ein Rad (8a) des dritten Paars von Rädern und ein Rad (8d) des vierten Paars von Rädern durch einen zweiten Radantriebsmotor (30) angetrieben werden, wobei der erste und der zweite Radantriebsmotor in dem zweiten Abschnitt (S2) angeordnet sind, und optional wobei der erste Radantriebsmotor (29) starr an dem ersten Radträger (24) montiert ist und durch mindestens ein Antriebsband (43) mit dem ersten Paar von Rädern (7a, 7b) wirkverbunden ist.

7. Behälterhandhabungsfahrzeug nach einem der vorhergehenden Ansprüche, umfassend eine Antriebswelle (31), die ein Rad (8a) des dritten Paars von Rädern und ein Rad (8d) des vierten Paars von Rädern mit dem zweiten Radantriebsmotor (30) wirkverbindet, wobei die Antriebswelle und die Räder (8a,8,d), die mit dem zweiten Radantriebsmotor (31) wirkverbunden sind, in dem zweiten Abschnitt (S2) angeordnet sind.

8. Behälterhandhabungsfahrzeug nach einem der vorhergehenden Ansprüche, wobei das zweite Paar von Rädern (7c, 7d), ein Rad (8b) des dritten Paars von Rädern und ein Rad (8c) des vierten Paars von Rädern nicht angetriebene Räder sind, wobei die nicht angetriebenen Räder in dem ersten Abschnitt (S1) angeordnet sind.

9. Behälterhandhabungsfahrzeug nach einem der vorhergehenden Ansprüche, wobei die Hebevorrichtung einen Hubrahmen (2) und mindestens eine drehbare Hubwelle (33) umfasst, die dazu ausgelegt ist, den Hubrahmen (2) über einen Satz von Hubbändern (5) anzuheben und abzusenken, wobei die Hubwelle in dem ersten Abschnitt (S1) über dem Hohlraum (26) angeordnet ist, und
optional umfassend einen Hubantriebsmotor (32) zum Drehen der mindestens einen Hubwelle (33), wobei der Hubantriebsmotor (32) in dem zweiten Abschnitt (S2) angeordnet ist.

10. Behälterhandhabungsfahrzeug nach einem der vorhergehenden Ansprüche, umfassend einen Satz austauschbarer oder einstellbarer Abstandsstifte (34), wobei die Abstandsstifte dazu ausgelegt sind, mit Schaltern (36) oder Sensoren am Hubrahmen (2) zusammenzuwirken, wenn sich der Hubrahmen in einer oberen Position befindet.

11. Behälterhandhabungsfahrzeug nach einem der vorhergehenden Ansprüche, umfassend eine wiederaufladbare Batterie (44), die in dem zweiten Abschnitt (S2) angeordnet ist, und
optional umfassend einen Satz von Elektroden (37) zum Empfangen von Leistung von einer Ladestation, wobei die Elektroden in dem zweiten Abschnitt (S2) angeordnet und mit der wiederaufladbaren Batterie (44) verbunden sind.

12. Behälterhandhabungsfahrzeug nach einem der vorhergehenden Ansprüche, umfassend eine Steuereinheit (19), die in dem zweiten Abschnitt (S2) angeordnet ist.

13. Lagersystem, umfassend ein Behälterhandhabungsfahrzeug (501) nach einem der vorhergehenden Ansprüche, wobei das Lagersystem eine Rahmenstruktur (100) mit mehreren Lagersäulen (105) zum Aufnehmen eines vertikalen Stapels von Lagerbehältern (106) und ein Schienensystem (108), auf dem sich das Fahrzeug in zwei senkrechten Richtungen über den Lagersäulen bewegen kann, umfasst.

14. Verfahren zum Ändern einer Fahrtrichtung eines Behälterhandhabungsfahrzeugs (501) zum Bewegen auf einem Schienensystem (108), wobei das Schienensystem einen ersten Satz paralleler Schienen (110) und einen senkrecht zum ersten Satz von Schienen (110) angeordneten zweiten Satz paralleler Schienen (111) umfasst, wobei das Behälterhandhabungsfahrzeug Folgendes umfasst:
einen Fahrzeugrahmen (6), der einen ersten Abschnitt (S1) und einen zweiten Abschnitt (S2) des Behälterhandhabungsfahrzeugs definiert, wobei der erste und der zweite Abschnitt nebeneinander angeordnet sind, wobei der erste Abschnitt (S1) eine Hebevorrichtung (2) zum Anheben eines Lagerbehälters (106) umfasst und einen Hohlraum (26) bereitstellt, in dem der angehobene Lagerbehälter aufgenommen werden kann;
einen ersten Satz von Rädern, der ein erstes Paar von Rädern (7a, 7b) und ein zweites Paar von Rädern (7c, 7d) umfasst, wobei das erste und das zweite Paar von Rädern auf gegenüberliegenden Teilen des ersten Abschnitts (S1) angeordnet sind, wobei während der Verwendung der erste Satz von Rädern eine Bewegung des Fahrzeugs (501) entlang einer ersten Richtung (Y) auf dem Schienensystem (108) ermöglicht; und
einen zweiten Satz von Rädern, der ein drittes Paar von Rädern (8a, 8b) und ein viertes Paar von Rädern (8c, 8d) umfasst, wobei das dritte und vierte Paar von Rädern auf gegenüberliegenden Seiten des Fahrzeugs angeordnet sind, wobei sich jede der Seiten von einer Kante des ersten Abschnitts (S1) zu einer Kante des zweiten Abschnitts (S2) erstreckt und während der Verwendung eine Bewegung des Fahrzeugs (501) entlang einer zweiten Richtung (X) auf dem Schienensystem (108) ermöglicht, wobei die zweite Richtung (X) senkrecht zur ersten Richtung (Y) ist,
wobei der erste Satz von Rädern so angeordnet ist, dass er in einer vertikalen Richtung (Z) relativ zu einem Rest des Fahrzeugrahmens zwischen einer oberen Position, in der der zweite Satz von Rädern eine Bewegung des Fahrzeugs (501) entlang der zweiten Richtung (X) ermöglicht, und einer unteren Position, in der der erste Satz von Rädern eine Bewegung des Fahrzeugs (501) entlang der ersten Richtung (Y) ermöglicht, beweglich ist, wobei das erste Paar von Rädern (7a, 7b) an einem ersten Radträger (24) montiert ist, wobei der erste Radträger Teil des zweiten Abschnitts (S2) ist;
das zweite Paar von Rädern (7c, 7d) an einem zweiten Radträger (25) montiert ist,
der zweite Radträger Teil des ersten Abschnitts (S1) ist, wobei das Verfahren durch Folgendes gekennzeichnet ist der erste Radträger und der zweite Radträger sind auf gegenüberliegenden Seiten des Hohlraums (26) angeordnet und relativ zum Rest des Fahrzeugrahmens (6) vertikal beweglich;
der erste Radträger (24) und der zweite Radträger (25) sind durch zwei Kopplungsverbindungsglieder (22) miteinander verbunden, die sich in der ersten Richtung (Y) auf gegenüberliegenden Seiten des Hohlraums (6) erstrecken, wobei jedes der Kopplungsverbindungsglieder Teil einer Verbindungsanordnung (15) ist, wobei die Verbindungsanordnungen dazu ausgelegt sind, eine vertikale Bewegung des ersten Radträgers (24) als eine vertikale Bewegung des zweiten Radträgers (25) zu replizieren, und wobei das Verfahren die folgenden Schritte umfasst:
- Bewegen des ersten Radträgers (24) in einer vertikalen Richtung; und
- gleichzeitiges Replizieren der vertikalen Bewegung des ersten Radträgers als eine vertikale Bewegung des zweiten Radträgers über die Verbindungsanordnungen, so dass sich der erste Satz von Rädern zwischen der oberen Position und der unteren Position bewegt.

15. Verfahren nach Anspruch 14, wobei das Behälterhandhabungsfahrzeug eine Aktuatoranordnung (17, 27) umfasst, die in dem zweiten Abschnitt (S2) angeordnet ist, wobei die Aktuatoranordnung einen Motor (17) und eine Kurbelanordnung (27) umfasst, wobei das Verfahren den folgenden Schritt umfasst
- Antreiben des Motors (17), um die Kurbelanordnung zu betätigen, so dass der erste Radträger (24) durch eine erste Welle (35a) und eine zweite Welle (35b), die mit dem ersten Radträger und der Kurbelanordnung verbunden sind, in der vertikalen Richtung bewegt wird.

## Revendications

1. Véhicule de manutention de conteneurs (501) destiné à se déplacer sur un système de rails (108), le système de rails comprenant un premier ensemble de rails parallèles (110) et un second ensemble de rails parallèles (111) disposé perpendiculairement au premier ensemble de rails (110), le véhicule de manutention de conteneurs comprenant :
un châssis de véhicule (6) définissant une première section (S1) et une seconde section (S2) du véhicule de manutention de conteneurs, les première et seconde sections étant disposées côte à côte, la première section (S1) comprenant un dispositif de levage (2) destiné à soulever un conteneur de stockage (106) et fournissant une cavité (26) dans laquelle le conteneur de stockage soulevé peut être logé ;
un premier jeu de roues comprenant une première paire de roues (7a, 7b) et une deuxième paire de roues (7c, 7d), les première et deuxième paires de roues étant disposées sur des parties opposées de la première section (S1), le premier jeu de roues permettant le déplacement du véhicule (501) le long d'une première direction (Y) sur le système de rails (108) pendant l'utilisation ; et
un second jeu de roues comprenant une troisième paire de roues (8a, 8b) et une quatrième paire de roues (8c, 8d), les troisième et quatrième paires de roues étant disposées sur des côtés opposés du véhicule, chacun des côtés s'étendant d'un bord de la première section (S1) à un bord de la seconde section (S2), permettant le mouvement du véhicule (501) le long d'une seconde direction (X) sur le système de rails (108) pendant l'utilisation, la seconde direction (X) étant perpendiculaire à la première direction (Y),
le premier jeu de roues étant conçu pour être déplaçable dans une direction verticale (Z) par rapport à un reste du châssis de véhicule entre une position haute dans laquelle le second jeu de roues permet le déplacement du véhicule (501) le long de la seconde direction (X), et une position basse dans laquelle le premier jeu de roues permet le déplacement du véhicule (501) le long de la première direction (Y),
la première paire de roues (7a, 7b) étant montée sur un premier support de roue (24), le premier support de roue faisant partie de la seconde section (S2) ;
la deuxième paire de roues (7c, 7d) étant montée sur un second support de roue (25),
le second support de roue faisant partie de la première section (S1), le véhicule de manutention de conteneurs (501) étant **caractérisé par**
le premier support de roue et le second support de roue disposés sur des côtés opposés de la cavité (26) et mobiles verticalement par rapport au reste du châssis de véhicule (6) ;
le premier support de roue (24) et le second support de roue (25) étant reliés entre eux par deux liaisons d'accouplement (22) s'étendant dans la première direction (Y) sur des côtés opposés de la cavité (6), chacune des liaisons d'accouplement faisant partie d'un ensemble de liaison (15), les ensembles de liaison étant conçus pour reproduire le mouvement vertical du premier support de roue (24) comme mouvement vertical du second support de roue (25).

2. Véhicule de manutention de conteneurs selon la revendication 1, comprenant un ensemble actionneur (17, 27), l'ensemble actionneur étant conçu pour déplacer le premier support de roue (24) dans une direction verticale entre une première position et une seconde position, le mouvement du premier support de roue (24) étant transféré au second support de roue (25) par l'intermédiaire des liaisons d'accouplement (22) des ensembles de liaison (15), de sorte que les deux paires de roues du premier jeu de roues soient dans la position haute lorsque le premier support de roue (24) est dans la première position et que les deux paires de roues du premier jeu de roues soient dans la position basse lorsque le premier support de roue (24) est dans la seconde position, et éventuellement, l'ensemble actionneur (17, 27) étant disposé dans la seconde section (S2).

3. Véhicule de manutention de conteneurs selon la revendication 2, l'ensemble actionneur comprenant un moteur (17) et un ensemble manivelle (27), ou un actionneur linéaire, et
éventuellement, comprenant le moteur (17) et l'ensemble manivelle (27), l'ensemble manivelle (27) et le premier support de roue (24) étant disposés dans des régions opposées de la seconde section (S2).

4. Véhicule de manutention de conteneurs selon l'une quelconque des revendications précédentes, chaque ensemble de liaison (15) comprenant deux liaisons intermédiaires (23) reliées de manière pivotante au niveau d'extrémités opposées de la liaison d'accouplement (22), chaque liaison intermédiaire (23) présentant un premier accouplement pivotant (23a) à la liaison d'accouplement, un deuxième accouplement pivotant (23b) au châssis de véhicule (6) et un troisième accouplement pivotant (23c) à l'un des premier et second supports de roue, et
éventuellement, chacun des troisièmes accouplements pivotants (23c) étant relié à l'un des premier et second supports de roue par l'intermédiaire d'une liaison de support de roue (28), la liaison de support de roue ayant un cinquième accouplement pivotant (28a) relié à un premier ou second support de roue correspondant.

5. Véhicule de manutention de conteneurs selon la revendication 4, les liaisons intermédiaires étant des liaisons coudées (23).

6. Véhicule de manutention de conteneurs selon l'une quelconque des revendications précédentes, la première paire de roues (7a, 7b) étant entraînée par un premier moteur d'entraînement de roue (29) et une roue (8a) de la troisième paire de roues, et une roue (8d) de la quatrième paire de roues étant entraînée par un second moteur d'entraînement de roue (30), les premier et second moteurs d'entraînement de roue étant disposés dans la seconde section (S2), et
éventuellement, le premier moteur d'entraînement de roue (29) étant solidarisé au premier support de roue (24) et relié fonctionnellement à la première paire de roues (7a, 7b) par au moins une bande d'entraînement (43).

7. Véhicule de manutention de conteneurs selon l'une quelconque des revendications précédentes, comprenant un arbre d'entraînement (31) reliant fonctionnellement une roue (8a) de la troisième paire de roues et une roue (8d) de la quatrième paire de roues au second moteur d'entraînement de roue (30), l'arbre d'entraînement et les roues (8a,8,d) reliés fonctionnellement au second moteur d'entraînement de roue (31) étant disposés dans la seconde section (S2).

8. Véhicule de manutention de conteneurs selon l'une quelconque des revendications précédentes, la deuxième paire de roues (7c, 7d), une roue (8b) de la troisième paire de roues, et une roue (8c) de la quatrième paire de roues étant des roues non entraînées, les roues non entraînées étant disposées dans la première section (S1).

9. Véhicule de manutention de conteneurs selon l'une quelconque des revendications précédentes, le dispositif de levage comprenant un châssis de levage (2) et au moins un arbre de levage (33) rotatif conçu pour soulever et abaisser le châssis de levage (2) par l'intermédiaire d'un ensemble de bandes de levage (5), l'arbre de levage étant disposé dans la première section (S1) au-dessus de la cavité (26), et
éventuellement comprenant un moteur d'entraînement de levage (32) destiné à faire tourner l'au moins un arbre de levage (33), le moteur d'entraînement de levage (32) étant disposé dans la seconde section (S2).

10. Véhicule de manutention de conteneurs selon l'une quelconque des revendications précédentes, comprenant un ensemble de broches d'écartement (34) remplaçables ou réglables, les broches d'écartement étant conçues pour interagir avec des commutateurs (36) ou des capteurs sur le châssis de levage (2) lorsque le châssis de levage est dans une position haute.

11. Véhicule de manipulation de conteneurs selon l'une quelconque des revendications précédentes, comprenant une batterie rechargeable (44) disposée dans la seconde section (S2), et
éventuellement comprenant un ensemble d'électrodes (37) destiné à recevoir de l'énergie provenant d'une station de charge, les électrodes étant disposées dans la seconde section (S2) et reliées à la batterie rechargeable (44).

12. Véhicule de manipulation de conteneurs selon l'une quelconque des revendications précédentes, comprenant une unité de commande (19) disposée dans la seconde section (S2).

13. Système de stockage comprenant un véhicule de manutention de conteneurs (501) selon l'une quelconque des revendications précédentes, le système de stockage comprenant une structure de cadre (100) présentant une pluralité de colonnes de stockage (105) pour recevoir une pile verticale de conteneurs de stockage (106), et un système de rails (108) sur lequel le véhicule peut se déplacer dans deux directions perpendiculaires au-dessus des colonnes de stockage.

14. Procédé de changement de la direction de déplacement d'un véhicule de manutention de conteneurs (501) destiné à se déplacer sur un système de rails (108), le système de rails comprenant un premier ensemble de rails parallèles (110) et un second ensemble de rails parallèles (111) disposé perpendiculairement au premier ensemble de rails (110), le véhicule de manutention de conteneurs comprenant :
un châssis de véhicule (6) définissant une première section (S1) et une seconde section (S2) du véhicule de manutention de conteneurs, les première et seconde sections étant disposées côte à côte, la première section (S1) comprenant un dispositif de levage (2) destiné à soulever un conteneur de stockage (106) et fournissant une cavité (26) dans laquelle le conteneur de stockage soulevé peut être logé ;
un premier jeu de roues comprenant une première paire de roues (7a, 7b) et une deuxième paire de roues (7c, 7d), les première et deuxième paires de roues étant disposées sur des parties opposées de la première section (S1), le premier jeu de roues permettant le déplacement du véhicule (501) le long d'une première direction (Y) sur le système de rails (108) pendant l'utilisation ; et
un second jeu de roues comprenant une troisième paire de roues (8a, 8b) et une quatrième paire de roues (8c, 8d), les troisième et quatrième paires de roues étant disposées sur des côtés opposés du véhicule, chacun des côtés s'étendant d'un bord de la première section (S1) à un bord de la seconde section (S2), permettant le mouvement du véhicule (501) le long d'une seconde direction (X) sur le système de rails (108) pendant l'utilisation, la seconde direction (X) étant perpendiculaire à la première direction (Y),
le premier jeu de roues étant conçu pour être mobile dans une direction verticale (Z) par rapport à un reste du châssis de véhicule entre une position haute dans laquelle le second jeu de roues permet le déplacement du véhicule (501) le long de la seconde direction (X), et une position basse dans laquelle le premier jeu de roues permet le déplacement du véhicule (501) le long de la première direction (Y)
la première paire de roues (7a, 7b) étant montée sur un premier support de roue (24), le premier support de roue faisant partie de la seconde section (S2) ;
la deuxième paire de roues (7c, 7d) étant montée sur un second support de roue (25),
le second support de roue faisant partie de la première section (S1), le procédé étant **caractérisé par**
le premier support de roue et le second support de roue disposés sur des côtés opposés de la cavité (26) et mobiles verticalement par rapport au reste du châssis de véhicule (6) ;
le premier support de roue (24) et le second support de roue (25) étant reliés entre eux par deux liaisons d'accouplement (22) s'étendant dans la première direction (Y) sur des côtés opposés de la cavité (6), chacune des liaisons d'accouplement faisant partie d'un ensemble de liaison (15), les ensembles de liaison étant conçus pour reproduire le mouvement vertical du premier support de roue (24) en tant que mouvement vertical du second support de roue (25), et le procédé comprenant les étapes consistant à :
- déplacer le premier support de roue (24) dans une direction verticale ; et
- répliquer simultanément le mouvement vertical du premier support de roue en mouvement vertical du second support de roue par l'intermédiaire des ensembles de liaison, de sorte que le premier jeu de roues se déplace entre la position haute et la position basse.

15. Procédé selon la revendication 14, le véhicule de manutention de conteneurs comprenant un ensemble actionneur (17, 27) disposé dans la seconde section (S2), l'ensemble actionneur comprenant un moteur (17) et un ensemble manivelle (27), le procédé comprenant l'étape consistant à
- entraîner le moteur (17) pour actionner l'ensemble manivelle, de sorte que le premier support de roue (24) soit déplacé dans la direction verticale par un premier arbre (35a) et un second arbre (35b) relié au premier support de roue et à l'ensemble manivelle.
